# EUROPEAN PATENT APPLICATION

(11) **EP 1 168 682 A2**
(43) Date of publication of application: **02.01.2002**
(21) Application number: 01114722.0
(22) Date of filing: 21.06.2001
(51) Int. Cl.: H04B 10/155, H04B 10/18

(54) **Radio-frequency transmitter with function of distortion compensation for optical transmission**

(30) Priority: 21.06.2000 JP 2000185829
(71) Applicant: MATSUSHITA ELECTRIC INDUSTRIAL CO., LTD., Kadoma-shi, Osaka-fu (JP)
(72) Inventor: Sasai, Hiroyuki, Katano-shi, Osaka-fu (JP); Fuse, Masaru, Toyonaka-shi, Osaka-fu (JP); Masuda, Kouichi, Hirakata-shi, Osaka-fu (JP)
(74) Representative: Lang, Johannes, Dipl.-Ing.

(57) **Abstract**

In optical transmission of a radio-frequency signal such as a microwave signal and millimeter-wave signal, a radio-frequency circuit for distortion compensation results in complex adjustment and very expensive. For betterment, the radio-frequency transmitter with the function of distortion compensation of the present invention takes the following structure.

An electrical signal is branched into two by a branch part, and one of the resulting electrical signals is converted into an optical signal by a first optical transmission part. The optical signal is then branched into two by a first coupler. One of the resulting optical signals is converted into an electrical signal in a first optical-electrical conversion part. Based on this electrical signal and the other of the electrical signals branched by the branch part, a distortion component is extracted as a differential component. In a second optical transmission part, the distortion component is then inverted in phase, and then converted into an optical signal. A delay part delays the other of the optical signals branched by the first coupler by a predetermined length of time, and the delayed optical signal is coupled with the optical signal outputted from the second optical transmission part in a second coupler.

## Description

### BACKGROUND OF THE INVENTION

### Field of the Invention

The present invention relates to a radio-frequency transmitter with the function of distortion compensation for high-performance optical transmission of a radio-frequency electrical signal such as microwave signal and millimeter-wave signal.

### Description of the Background Art

An exemplary typical radio-frequency signal transmission system is the Fiber-optic SCM (sub-carrier Multiplexing) transmission system wherein a modulated electrical signal is optically transmitted as it is. Under this system, conventionally used to convert the electrical signal into an optical signal are a light source for direct modulation and an external modulator. Here, such devices cause nonlinear distortion if used for electrical-optical conversion due to their input-output characteristics. This distortion occurring during electrical-optical conversion predominantly affects the transmission characteristic of the optical transmission system, to which an optical transmission technique is applied. Thus, a distortion compensation technique is often applied to suppress and improve the transmission characteristic.

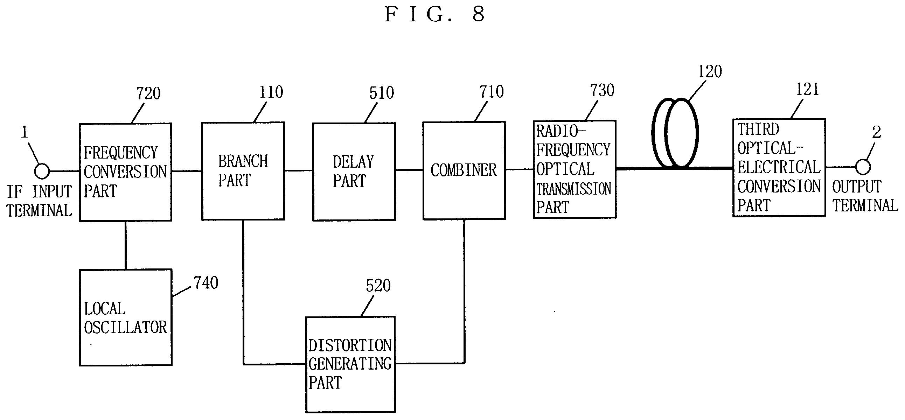

FIG. 8 shows the structure of an optical transmitter with the conventional distortion compensation technique applied. By referring to FIG. 8, described now is the operation of such conventional distortion-compensating optical transmitter. In FIG. 8, the optical transmitter includes an IF input terminal 1, an output terminal 2, a frequency conversion part 720, a local oscillator 740, a branch part 110, a delay part 510, a distortion generating part 520, a combiner 710, a radio-frequency optical transmission part 730, an optical fiber 120, and a third optical-electrical conversion part 121.

A modulated intermediate-frequency signal (IF signal) provided by the IF input terminal 1 is frequency-converted in the frequency conversion part 720 based on a local oscillator signal coming from the local oscillator 740. The resulting radio-frequency signal (RF signal) is then branched into two by the branch part 110. One of the resulting two RF signals branched by the branch part 110 is forwarded to the radio-frequency optical transmission part 730 via both the delay part 510 and the combiner 710, while the other to the distortion generating part 520. In the radio-frequency optical transmission part 730, due to the nonlinearlity observed at electrical-optical conversion, a resulting distortion component is subjected to conversion together with the RF signal. An optical signal derived thereby is transmitted to the third optical-electrical conversion part 121 through the optical fiber 120. The optical signal is then converted into an electrical signal, and outputted from the output terminal 2.

In the above structure, the distortion generating part 520 receiving one of the RF signals branched in the branch part 110 is provided for suppressing the distortion component occurred in the radio-frequency optical transmission part 730. The distortion generating part 520 generates, from the RF signal, a distortion component of a desired power level. Here, the distortion component is so set as to be opposite in phase to the distortion component in the radio-frequency optical transmission part 730. The distortion generating part 520 is exemplified by a diode characteristically opposite in phase to the nonlinearlity observed at electrical-optical conversion in the radio-frequency optical transmission part 730. The distortion component of the distortion generating part 520 is combined with the RF signal in the combiner 710. At this time, the delay part 510 is adjusted in delay so that the combiner 710 receives the two distortion components opposite in phase at the same time. By controlling delay as such, the distortion component combined into the RF signal and that in the radio-frequency optical transmission part 730 cancel out each other, realizing high-performance optical transmission with low distortion.

As such, before being forwarded to the radio-frequency optical transmission part 730, the RF signal is combined with the distortion component, which is opposite in phase to the distortion component to be occurred in the radio-frequency optical transmission part 730. Thus, the distortion component occurred in the radio-frequency optical transmission part 730 can be cancelled out thereby, realizing optical transmission characterized in low distortion.

The problem here is, however, such conventional distortion-compensating optical transmitter requires expensive radio-frequency devices for processing the radio-frequency signal to generate a distortion component therefrom or perform distortion compensation therewith, for example. If the signal is ultra-high in frequency such as a microwave signal and millimeter-wave signal, constituents required for a distortion compensation circuit result in extremely expensive. What is worse, setting and adjusting a circuit constant becomes difficult.

### SUMMARY OF THE INVENTION

Therefore, an object of the present invention is to provide a radio-frequency transmitter with the function of distortion compensation wherein a distortion component occurred in the frequency band lower than that of an RF signal such as a microwave signal and millimeter-wave signal can be compensated with low cost by utilizing a distortion component previously generated in the frequency band of an IF signal.

The present invention has the following features to attain the object above.

A first aspect of the present invention is directed to a radio-frequency transmitter with a function of distortion compensation which comprises: a branch part for branching an electrical signal into two; a first optical transmission part for converting one of the electrical signals branched by the branch part into an optical signal; a first coupler for branching into two the optical signal outputted from the first optical transmission part; a first optical-electrical conversion part for converting one of the optical signals branched by the first coupler into an electrical signal; a distortion detection part for extracting a distortion component as a differential component between the electrical signal outputted from the first optical-electrical conversion part and the other of the electrical signals branched by the branch part; a second optical transmission part for inverting a phase of the distortion component extracted by the distortion detection part, and converting the distortion component into an optical signal; an optical delay part for delaying the other of the optical signals branched by the first coupler by a predetermined length of time; and a second coupler for coupling the optical signal outputted from the second optical transmission part and the optical signal passed through the optical delay part, and sending out a resulting coupled optical signal to an optical transmission path as a transmission signal.

A second aspect of the present invention is directed to a radio-frequency transmitter with a function of distortion compensation which comprises: a branch part for branching an electrical signal into two; first and second light sources for outputting lights; a first external modulation part for modulating an optical signal in intensity outputted from the first light source based on one of the electrical signals branched by the branch part; a first coupler for branching into two the optical signal outputted from the first external modulation part; a first optical-electrical conversion part for converting the other of the optical signals branched by the first coupler into an electrical signal; a distortion detection part for extracting a distortion component as a differential component between the electrical signal outputted from the first optical-electrical conversion part and the other of the electrical signals branched by the branch part; a second external modulation part for inverting a phase of the distortion component extracted by the distortion detection part, and based on the distortion component, modulating the optical signal in intensity outputted from the second light source; an optical delay part for delaying the other of the optical signals branched by the first coupler by a predetermined length of time; and a second coupler for coupling the optical signal outputted from the second external modulation part and the optical signal passed through the light delay part, and sending out a resulting coupled optical signal to an optical transmission path as a transmission signal.

As described above, in the first and second aspects, the radio-frequency transmitter with the function of distortion compensation uses two transmission parts, one of which is a first optical transmission part (or a first external modulation part) wherein an electrical signal is converted into an optical signal, and the other is a second optical transmission part (or a second light source) which is utilized as a light source, under the heterodyne technique, for frequency-converting the electrical signal into a radio-frequency. As such, the electrical signal is first converted into the optical signal, and then a distortion component occurred in the first optical transmission part (or the first external modulation part) is extracted. Then, in the second optical transmission part (or the second external modulation part) , the extracted distortion component is inverted in phase, and converted into the optical signal. In this manner, the distortion component can be cancelled out.

According to a third aspect, in the first aspect, the radio-frequency transmitter with the function of distortion compensation further comprises: a second optical-electrical conversion part for converting a part of the optical signal outputted from the second coupler into an electrical signal; and an optical frequency control part for extracting a predetermined frequency component from the electrical signal outputted from the second optical-electrical conversion part, and controlling the first optical transmission part and/or the second optical transmission part to keep a difference in optical frequency constant between an optical carrier outputted from the first optical transmission part and another optical carrier outputted from the second optical transmission part.

According to a fourth aspect, in the second aspect, the radio-frequency transmitter with the function of distortion compensation further comprises: a second optical-electrical conversion part for converting a part of the optical signal outputted from the second coupler into an electrical signal; and an optical frequency control part for extracting a predetermined frequency component from the electrical signal outputted from the second optical-electrical conversion part, and controlling the first light source and/or the second light source to keep a difference in optical frequency constant between an optical carrier outputted from the first light source and another optical carrier outputted from the second light source.

As described above, in the third and fourth aspects, the two optical transmission parts or the two light sources are so controlled as to make a difference in optical frequency constant between optical carriers outputted therefrom. Therefore, after optical transmission, resultantly derived is a high-performance radio-frequency signal.

A fifth aspect of the present invention is directed to a radio-frequency transmitter with a function of distortion compensation which comprises: a branch part for branching an electrical signal into two; a multi-wavelength light source for outputting a light having optical spectra at a constant wavelength interval; a wavelength separation part for extracting two of the optical spectra differing in wavelength by a predetermined value from the light outputted from the multi-wavelength light source, separating the extracted two spectra, and outputting as first and second optical signals; a first external modulation part for modulating, based on the other of the electrical signals branched by the branch part, the first optical signal in intensity inputted by the wavelength separation part; a first coupler for branching into two the optical signal outputted from the first external modulation part; a first optical-electrical conversion part for converting the other of the optical signals branched by the first coupler into an electrical signal; a distortion detection part for extracting a distortion component as a differential component between the electrical signal outputted from the first optical-electrical conversion part and the other of the electrical signals branched by the branch part; a second external modulation part for inverting a phase of the distortion component extracted by the distortion detection part, and based on the distortion component, modulating the second optical signal in intensity inputted by the wavelength separation part; an optical delay part for delaying the other of the optical signals branched by the first coupler by a predetermined length of time; and a second coupler for coupling the optical signal outputted from the second external modulation part and the optical signal passed through the light delay part, and sending out a resulting coupled optical signal to an optical transmission path as a transmission signal.

As described above, in the fifth aspect, from a light outputted from a very-stably-oscillating multi-wavelength light source, two optical spectrum components are separated and used as two light sources. Therefore, there is no more need to include an optical frequency control part for controlling a difference in optical frequency to be constant between optical carriers.

A sixth aspect of the present invention is directed to a radio-frequency transmitter with a function of distortion compensation which comprises: a branch part for branching an electrical signal into two; a delay part for delaying one of the electrical signals branched by the branch part by a predetermined length of time; a first optical transmission part for converting the electrical signal outputted from the delay part into an optical signal; a distortion generating part for generating, from the other of the electrical signals branched by the branch part, a distortion component of predetermined amplitude having a phase opposite to a distortion component occurred in the first optical transmission part; a second optical transmission part for converting the distortion component outputted from the distortion generating part into an optical signal; and a second coupler for coupling the optical signal outputted from the first optical transmission part and the optical signal from the second optical transmission part, and sending out a resulting coupled optical signal to a transmission path as a transmission signal.

A seventh aspect of the present invention is directed to a radio-frequency transmitter with a function of distortion compensation which comprises: a branch part for branching an electrical signal into two; a delay part for delaying one of the electrical signals branched by the branch part by a predetermined length of time; first and second light sources for outputting lights; a first external modulation part for modulating the optical signal in intensity outputted from the first light source based on the electrical signal outputted from the delay part; a distortion generating part for generating, from the other of the electrical signals branched by the branch part, a distortion component of predetermined amplitude having a phase opposite to a distortion component occurred in the first external modulation part; a second external modulation part for modulating the optical signal in intensity outputted from the second light source based on the distortion component outputted from the distortion generating part; and a second coupler for coupling the optical signal outputted from the first external modulation part and the optical signal from the second external modulation part, and sending out a resulting coupled optical signal to a transmission path as a transmission signal.

As described above, in the sixth and seventh aspects, the radio-frequency transmitter with the function of distortion compensation uses two transmission parts, one of which is a first optical transmission part (or a first external modulation part) wherein an electrical signal is converted into an optical signal, and the other is a second optical transmission part (or a second external modulation part) which is used as a light source, under the heterodyne technique, for frequency-converting the electrical signal into a radio-frequency. As such, a distortion component occurred in the first optical transmission part (or the first external modulation part) is cancelled out. Thus, another distortion component opposite in phase is electrically generated, and then in the second optical transmission part (or the second external modulation part), thus generated distortion component is converted into an optical signal. In this manner, the distortion component can be cancelled out in a simplified structure.

According to an eighth aspect, in the sixth aspect, the radio-frequency transmitter with the function of distortion compensation further comprises: a second optical-electrical conversion part for converting a part of the optical signal outputted from the second coupler into an electrical signal; and an optical frequency control part for extracting a predetermined frequency component from the electrical signal outputted from the second optical-electrical conversion part, and controlling the first optical transmission part and/or the second optical transmission part to keep a difference in optical frequency constant between an optical carrier outputted from the first optical transmission part and another optical carrier outputted from the second optical transmission part.

According to a ninth aspect, in the seventh aspect, the radio-frequency transmitter with the function of distortion compensation further comprises: a second optical-electrical conversion part for converting a part of the optical signal outputted from the second coupler into an electrical signal; and an optical frequency control part for extracting a predetermined frequency component from the electrical signal outputted from the second optical-electrical conversion part, and controlling the first light source and/or the second light source to keep a difference in optical frequency constant between an optical carrier outputted from the first light source and another optical carrier outputted from the second light source.

As described above, in the eighth and ninth aspects, the two optical transmission parts or the two light sources are so controlled as to make a difference in optical frequency constant between optical carriers outputted therefrom. Therefore, after optical transmission, resultantly derived is a high-performance radio-frequency signal.

A tenth aspect of the present invention is directed to a radio-frequency transmitter with a function of distortion compensation which comprises: a branch part for branching an electrical signal into two; a delay part for delaying one of the electrical signals branched by the branch part by a predetermined length of time; a multi-wavelength light source for outputting a light having optical spectra at a constant wavelength interval; a wavelength separation part for extracting two of the optical spectra differing in wavelength by a predetermined value from the light outputted from the multi-wavelength light source, separating the extracted two spectra, and outputting as first and second optical signals; a first external modulation part for modulating, based on the electrical signal outputted from the delay part, the first optical signal in intensity inputted by the wavelength separation part; a distortion detection part for generating, from the other electrical signals branched by the branch part, a distortion component of predetermined amplitude having a phase opposite to a distortion component occurred in the first external modulation part; a second external modulation part for modulating, based on the distortion component outputted from the distortion detection part, the second optical signal in intensity inputted by the wavelength separation part; and a second coupler for coupling the optical signal outputted from the first external modulation part and the optical signal outputted from the second external modulation part, and sending out a resulting coupled optical signal to an optical transmission path as a transmission signal.

As described above, in the tenth aspect, from a light outputted from a very-stably-oscillating multi-wavelength light source, two optical spectrum components are separated and used as two light sources. Therefore, there is no more need to include an optical frequency control part for controlling a difference in optical frequency to be constant between optical carriers.

An eleventh aspect of the present invention is directed to a radio-frequency transmitter with a function of distortion compensation which comprising: a branch part for branching an electrical signal into two; a delay part for delaying one of the electrical signals branched by the branch part by a predetermined length of time; a distortion generating part for generating, from the other of the electrical signals branched by the branch part, a distortion component of a predetermined phase and amplitude; a combiner for combining the electrical signal outputted from the delay part and the distortion component outputted from the distortion generating part; a frequency conversion part for converting a resulting signal outputted from the combiner into a predetermined frequency; and a radio-frequency optical transmission part for converting a resulting signal converted into the predetermined frequency by the frequency conversion part into an optical signal; wherein the distortion component generated in the distortion generating part is opposite in phase to a distortion component occurred in the radio-frequency optical transmission part.

As described above, in the eleventh aspect, a distortion component is first generated as an electrical signal in an intermediate-frequency, frequency-converted into a radio-frequency signal, and then converted into an optical signal. In this manner, the distortion component and another distortion component to be occurred at the time of conversion from the radio-frequency signal into an optical signal cancel out each other. Therefore, the radio-frequency signal can be optically transmitted in high performance with a simplified structure.

A twelfth aspect of the present invention is directed to a radio-frequency transmitter with a function of distortion compensation which comprises: a branch part for branching an electrical signal into two; a delay part for delaying one of the electrical signals branched by the branch part by a predetermined length of time; a distortion generating part for generating, from the other of the electrical signals branched by the branch part, a distortion component of a predetermined phase and amplitude; a combiner for combining the electrical signal outputted from the delay part and the distortion component outputted from the distortion generating part; a frequency conversion part for converting a resulting signal outputted from the combiner into a predetermined frequency; and a radio-frequency amplification part for amplifying a resulting signal converted into the predetermined frequency by the frequency conversion part into an optical signal; wherein the distortion component generated in the distortion generating part is opposite in phase to a distortion component occurred in the radio-frequency amplification part.

As described above, in the twelfth aspect, a distortion component is first generated as an electrical signal in an intermediate-frequency, frequency-converted into a radio-frequency signal, and then amplified. In this manner, the distortion component and another distortion component to be occurred when amplifying the radio-frequency signal cancel out each other. Therefore, the radio-frequency signal can be optically transmitted in high performance with a simplified structure.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram showing the structure of a radio-frequency transmitter with a function of distortion compensation according to a first embodiment of the present invention;
FIG. 2A is a diagram showing a spectrum of an optical signal outputted from a first optical transmission part 111 of FIG. 1;
FIG. 2B is a diagram showing a spectrum of an optical signal outputted from a second optical transmission part 116 of FIG. 1;
FIG. 2C is a diagram showing a spectrum of the optical signal outputted from a second coupler 117 of FIG. 1;
FIG. 2D is a diagram showing a spectrum of an electrical signal outputted from a third optical-electrical conversion part 121 of FIG. 1;
FIG. 3 is a diagram showing the structure of a radio-frequency transmitter with a function of distortion compensation according to a second embodiment of the present invention;
FIGS. 4A and 4B are diagrams each exemplarily showing a specific structure of a double-wavelength light source of FIG. 3;
FIG. 5 is a diagram showing the structure of a radio-frequency transmitter with a function of distortion compensation according to a third embodiment of the present invention;
FIG. 6 is a diagram showing the structure of a radio-frequency transmitter with a function of distortion compensation according to a fourth embodiment of the present invention;
FIG. 7 is a diagram showing the structure of a radio-frequency transmitter with a function of distortion compensation according to a fifth embodiment of the present invention; and
FIG. 8 is a diagram showing the structure of a conventional distortion-compensating optical transmitter.

### DESCRIPTION OF THE PREFERRED EMBODIMENTS

### (First embodiment)

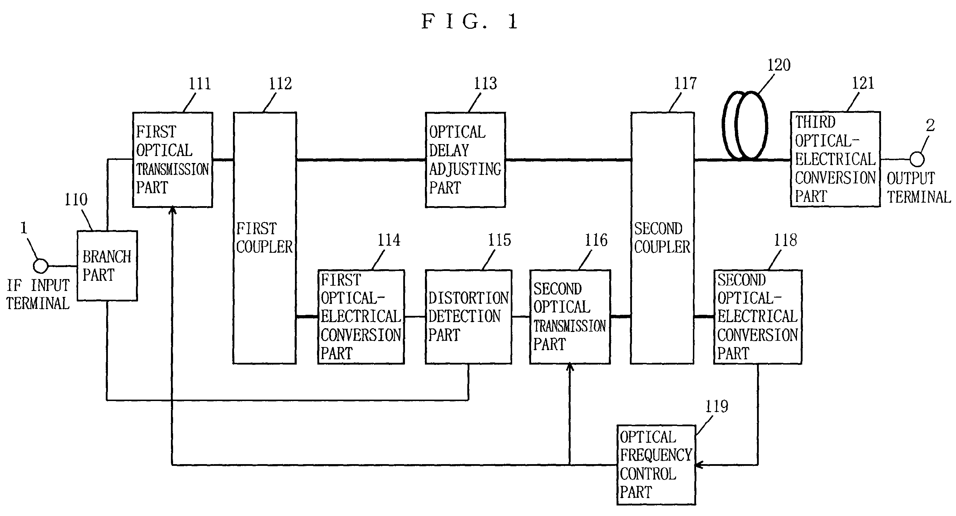

FIG. 1 shows the structure of a radio-frequency transmitter with the function of distortion compensation according to a first embodiment of the present invention. In FIG. 1, the radio-frequency transmitter with the function of distortion compensation includes the IF input terminal 1, the output terminal 2, the branch part 110, a first optical transmission part 111, a first coupler 112, an optical delay adjusting part 113, a first optical-electrical conversion part 114, a distortion detection part 115, a second optical transmission part 116, a second coupler 117, a second optical-electrical conversion part 118, an optical frequency control part 119, the optical fiber 120, and the third optical-electrical conversion part 121. Herein, any constituent appeared in FIG. 8 is under the same reference numeral.

Described now is the operation of such radio-frequency transmitter of the present embodiment. A modulated IF signal coming from the IF input terminal 1 is branched into two by the branch part 110. Therebefore, the IF signal may be subjected to frequency division multiplexing. One of the resulting two IF signals branched by the branch part 110 is forwarded to the first optical transmission part 111, and converted into a first optical signal. Here, the first optical signal includes both the IF signal and a distortion component, which is occurred due to the nonlinearlity observed at electrical-optical conversion in the first optical transmission part 111. The first optical signal is branched into two by the first coupler 112. One of the resulting two first optical signals is forwarded to the first optical-electrical conversion part 114, and outputted as an IF signal to the distortion detection part 115. Here, the outputted IF signal includes the distortion component resulted from the nonlinearlity in the first optical transmission part 111. The distortion detection part 115 then extracts the distortion component from this IF signal by utilizing another IF signal of no distortion forwarded from the branch unit 110. To be specific, a difference between those two signals is taken to generate a differential signal. The extracted distortion component is then converted into a second optical signal in the second optical transmission part 116.

One of the first optical signals branched by the first coupler 112 is forwarded to the second coupler 117 via the optical delay adjusting part 113, and combined with the second optical signal outputted from the second optical transmission part 116. Then, the second coupler 117 branches the resulting combined signal into two. One of the branched optical signals is outputted to the optical fiber 120 as an output from the present radio-frequency transmitter, and then converted into an electrical signal by the third optical-electrical conversion part 121. The electrical signal is then outputted from the output terminal 2. At this time, the IF signal is frequency-converted into a radio frequency based on the frequency corresponding to a difference in wavelength between the optical signals outputted from the first and second optical transmission parts 111 and 116. In the optical delay adjusting part 113, the distortion component included in the optical signal from the first optical transmission part 111 and the distortion component in the optical signal from the second optical transmission part 116 are adjusted to be opposite in phase to each other. Accordingly, with the optical delay adjusting part 113 adjusted in delay, those two distortion components cancel out each other.

On the other hand, the other optical signal branched by the second coupler 117 is converted into an electrical signal by the second optical-electrical conversion part 118, and then forwarded to the optical frequency control part 119. Here, the electrical signal outputted from the second optical-electrical conversion part 118 includes a beat component with a frequency corresponding to the difference in wavelength between the optical signals from the first and second optical transmission parts 111 and 116. In order to keep the beat component constant in frequency, the optical signal from the first optical transmission part 111 and/or the optical signal from the second optical transmission part 116 is controlled in oscillation wavelength. Note here that, if the optical signals from the first and second optical transmission parts 111 and 116 are both stable in oscillation wavelength, there is no need for such oscillation wavelength control as keeping the beat component constant in frequency.

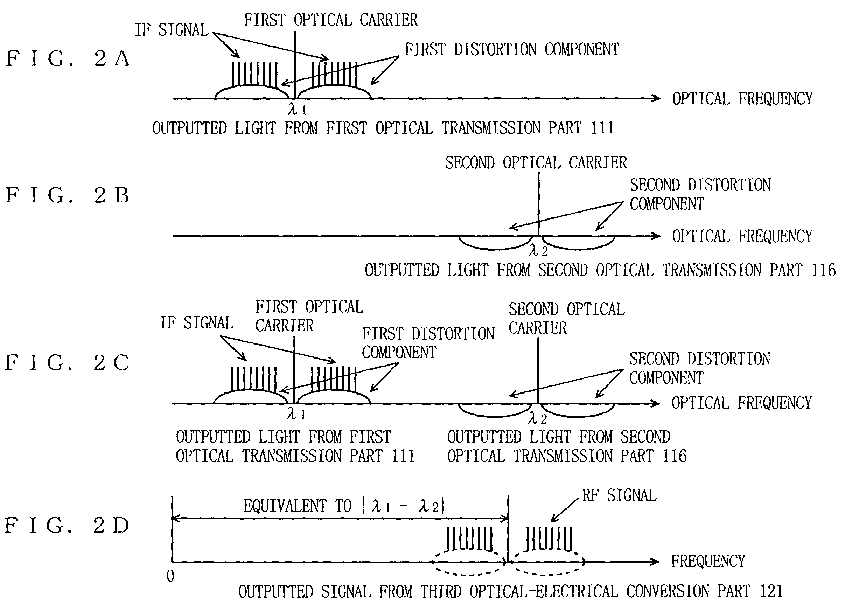

FIG. 2A schematically shows a spectrum of the optical signal outputted from the first optical transmission part 111, FIG. 2B a spectrum of the optical signal from the second optical transmission part 116, FIG. 2C a spectrum of the optical signal from the second coupler 117, and FIG. 2D a spectrum of the electrical signal from the third optical-electrical conversion part 121. By referring to these drawings, the operation of the present radio-frequency transmitter is described more in detail.

As shown in FIG. 2A, when the modulated IF signal is converted into the optical signal in the first optical transmission part 111, a distortion component is occurred. As a result, sidebands corresponding to modulated components of the IF signal and the distortion component are generated on both sides of a first optical carrier. As to the spectrum of FIG. 2B, the second optical transmission part 116 converts only the distortion component extracted by the distortion detection part 115 from the optical signal outputted from the first optical transmission part 111. Thus, the optical signal outputted from the second optical transmission part 116 has such spectrum as shown in FIG. 2B. In the second coupler 117, two optical signals are coupled together. Thus, the resultant optical signal has such spectrum as shown in FIG. 2C. Herein, the frequency interval between the first optical carrier and a second optical carrier is equivalent to the local oscillation frequency for the IF signal to be frequency-converted into the RF signal. In the electrical signal outputted from the third optical-electrical conversion part 121, included in the radio-frequency band are a beat component between the first optical carrier and a second distortion component, a beat component between the second optical carrier and a first distortion component, and a beat component between the second optical carrier and the IF signal. Among those, the beat component of the first optical carrier and the second distortion component, and the beat component of the second optical carrier and the first distortion component are so adjusted by the optical delay adjusting part 113 as to be opposite in phase to each other. Therefore, the distortion components occurred in the radio-frequency band cancel out each other, realizing optical transmission with low distortion.

As a result, the electrical signal outputted from the third optical-electrical conversion part 121 has such spectrum as shown in FIG. 2D. The resulting RF signal is the one derived by converting the IF signal by the frequency equivalent to the frequency interval between the wavelengths λ1 and λ2, and has no distortion.

As described above, in the radio-frequency transmitter with the function of distortion compensation of the present embodiment, an IF signal is frequency-converted into an RF signal by using two optical transmission parts differing in oscillation wavelength by a predetermined value. Further, the signal processing for canceling out distortion components occurred at electrical-optical conversion is carried out in the frequency band of the IF signal. In this manner, there is no more need for expensive radio-frequency devices, realizing high-quality optical transmission with low cost.

### (Second embodiment)

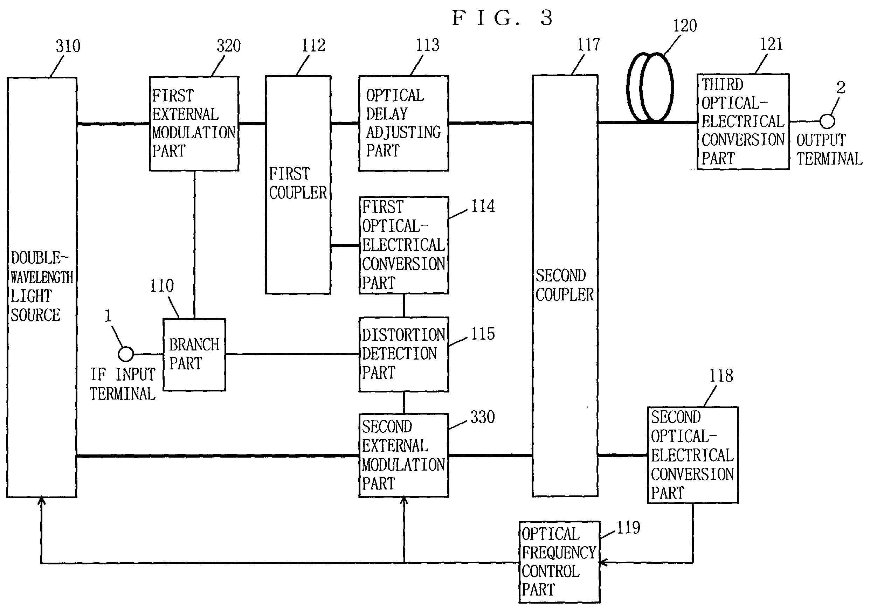

FIG. 3 shows the structure of a radio-frequency transmitter with the function of distortion compensation according to a second embodiment of the present invention. In FIG. 3, the radio-frequency transmitter with the function of distortion compensation includes the IF input terminal 1, the output terminal 2, the branch part 110, a double-wavelength light source 310, the first coupler 111, the optical delay adjusting part 113, the first optical-electrical conversion part 114, the distortion detection part 115, a first external modulation part 320, a second external modulation part 330, the second coupler 117, the second optical-electrical conversion part 118, the optical frequency control part 119, the optical fiber 120, and the third optical-electrical conversion part 121.

Described now is the operation of the radio-frequency transmitter with the function of distortion compensation of the second embodiment. In FIG. 3, any constituent operating the same as the one in the first embodiment is under the same reference numeral, and described here is any difference from the first embodiment.

From the double-wavelength light source 310, two lights oscillating at wavelength with predetermined intervals are outputted to the first and second external modulation parts 320 and 330, respectively. The modulated IF signal coming from the IF input terminal 1 is branched into two by the branch part 110.

One of the resulting IF signals branched by the branch part 110 is converted into a first optical signal by the first external modulation part 320. The first optical signal includes both the IF signal and a distortion component, which is occurred due to the nonlinearlity observed at electrical-optical conversion in the first external modulation part 320.

Thereafter, similarly to the first embodiment, the distortion component occurred in the first external modulation part 320 is extracted by the distortion detection part 115. Thus extracted distortion component is then converted into a second optical signal by the second external modulation part 330. Then, the first and second optical signals are coupled together in the second coupler 117 similarly to the first embodiment. In this manner, as an output from the present radio-frequency transmitter, outputted to the optical fiber 120 is the optical signal with characteristically low distortion.

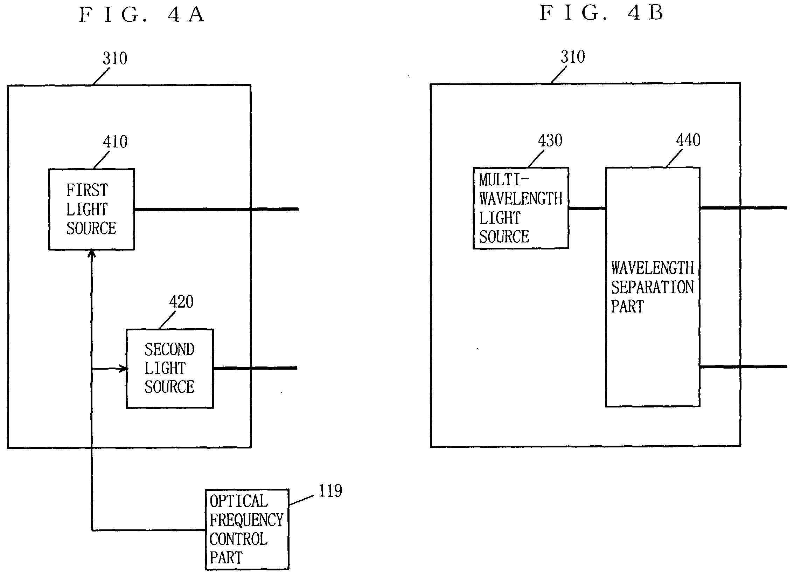

FIGS. 4A and 4B each exemplarily show a specific structure of the double-wavelength light source 310. In FIG. 4A, the double-wavelength light source 310 includes first and second light sources 410 and 420, and in FIG. 4B, includes a multi-wavelength light source 430 and a wavelength separation part 440.

The double-wavelength light source 310 may take such structure as shown in FIG. 4A including the first and second light sources 410 and 420, which output lights oscillating in each predetermined wavelength. In such case, the light outputted from the first light source 410 and/or the second light source 420 is controlled in oscillation wavelength by information provided by the optical frequency control part 119. Accordingly, lights outputted from the first and second light sources 410 and 420 are predetermined in oscillation wavelength and thus stable. Therefore, in this case, the optical frequency control part 119 has no need to perform oscillation wavelength control.

Further, applied in the second embodiment is the external modulation scheme. Thus, the double-wavelength light source 310 may take such structure as shown in FIG. 4B including the multi-wavelength light source 430 and the wavelength separation part 440. Here, the multi-wavelength light source 430 outputs a multi-wavelength light with high stability at predetermined frequency intervals such as a mode-locked laser, and the wavelength separation part 440 extracts the desired-wavelength light. Also in this case, lights to be outputted are very stable in oscillation wavelength, and thus oscillation wavelength control is not necessarily performed.

As described above, in the radio-frequency transmitter with the function of distortion compensation of the present embodiment, the double-wavelength light source is used as a light source, and an electrical signal is converted into an optical signal under the external modulation scheme. Accordingly, a light outputted from the light source becomes stable in oscillation wavelength, and there is no more need to include the optical frequency control part required in the first embodiment. Further, in addition to the effects achieved in the first embodiment, frequency accuracy can be improved at frequency conversion from an IF signal to an RF signal since a frequency difference equivalent to the wavelength interval can be derived with stability.

### (Third embodiment)

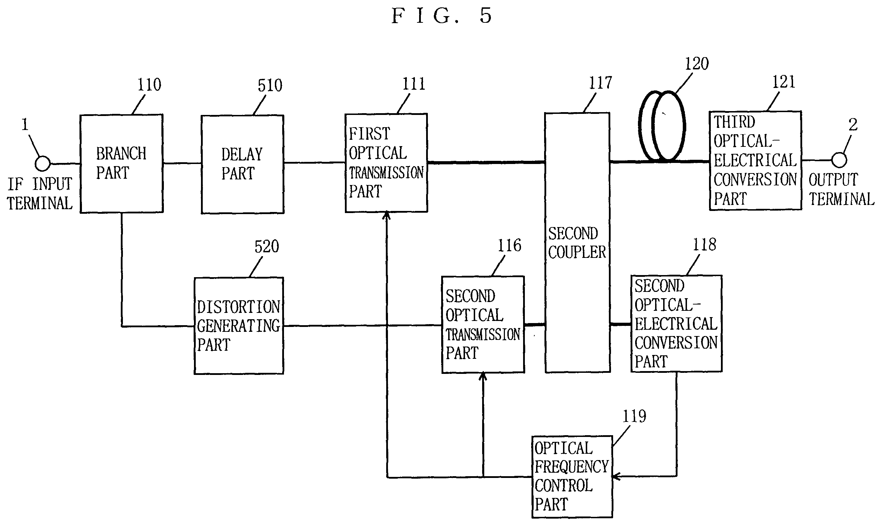

FIG. 5 shows the structure of a radio-frequency transmitter with the function of distortion compensation according to a third embodiment of the present invention. In FIG. 5, the radio-frequency transmitter with the function of distortion compensation includes the IF input terminal 1, the output terminal 2, the branch part 110, a delay part 510, a distortion generating part 520, the first optical transmission part 111, the second optical transmission part 116, the second coupler 117 , the second optical-electrical conversion part 118, the optical-frequency control part 119, the optical fiber 120, and the third optical-electrical conversion part 121.

Described now is the operation of the radio-frequency transmitter with the function of distortion compensation of the third embodiment. The modulated IF signal provided by the IF input terminal 1 is branched into two by the branch part 110. One of the resulting two IF signals branched by the branch part 110 goes through the delay part 510, and is converted into an optical signal by the first optical transmission part 111. This conversion results in a distortion component. The other IF signal branched by the branch part 110 is forwarded to the distortion generating part 520, and therein, another distortion component is generated. Here, the generated distortion component is of the same level (amplitude) as the distortion component occurred in the first optical transmission unit 111 and opposite in phase thereto. The distortion component generated in the distortion generating part 520 is converted into an optical signal in the second optical transmission part 116. This resulting optical signal differs in wavelength by a predetermined value from the optical signal outputted from the first optical transmission unit 111.

The optical signals outputted from the first and second optical transmission parts 111 and 116 are coupled together and branched into two by the second coupler 117. One of the resulting branched optical signals is outputted to the optical fiber 120 as an output from the radio-frequency transmitter with the function of distortion compensation, and then converted into an electrical signal by the third optical-electrical conversion part 121. The resulting electrical signal is outputted from the output terminal 2. At this time, the IF signal is frequency-converted into a radio-frequency based on the frequency corresponding to a wavelength difference between the optical signals outputted from the first and second optical transmission part 111 and 116. Herein, the delay part 510 is adjusted in delay so that a time taken for one of the IF signals branched into two by the branch part 111 to be converted into an optical signal in the first optical transmission part 111 and received by the third optical-electrical conversion part 121 coincides with a time for the other IF signal to be converted into an optical signal in the second optical transmission part 116 and received by the third optical-electrical conversion part 121.

As described above, in the radio-frequency transmitter with the function of distortion compensation of the present embodiment, the distortion generating part is provided for generating a distortion component to cancel out another distortion component to be occurred when an IF signal is converted into an optical signal. Thus, compared with the first embodiment, there is no more need to include the device needed for distortion extraction after converting the IF signal into the optical signal. Accordingly, a radio-frequency transmitter with the function of distortion compensation can be realized with a simplified structure.

### (Fourth embodiment)

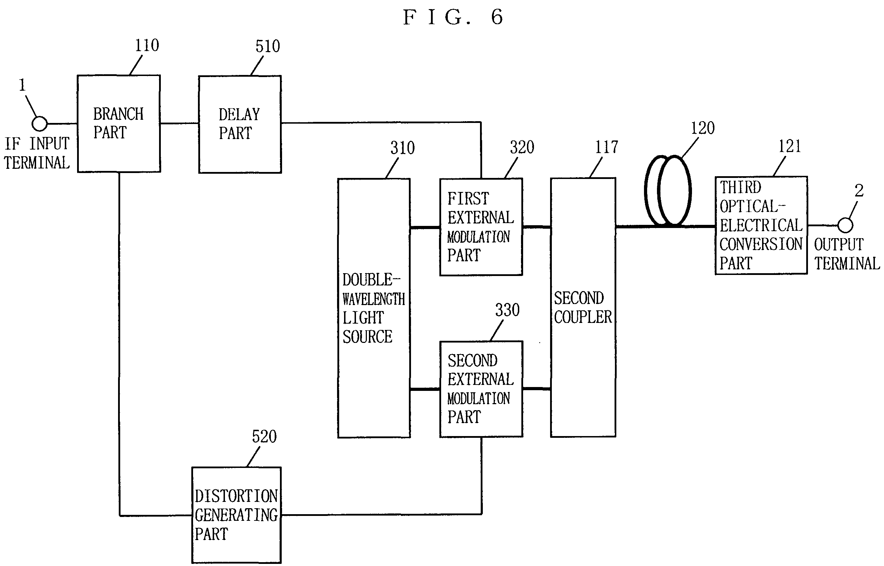

FIG. 6 shows the structure of a radio-frequency transmitter with the function of distortion compensation according to a fourth embodiment of the present invention. In FIG. 6, the radio-frequency transmitter with the function of distortion compensation includes the IF input terminal 1, the output terminal 2, the branch part 110, the delay part 510, the distortion generating part 520, the double-wavelength light source 310, the first external modulation part 320, the second external modulation part 330, the second coupler 117, the optical fiber 120, and the third optical-electrical conversion part 121.

Described next is the operation of the radio-frequency transmitter with the function of distortion compensation of the fourth embodiment. In the double-wavelength light source 310, two optical signals oscillating at wavelength with predetermined intervals are outputted from each different terminal to the first and second external modulation parts 320 and 330, respectively. On the other hand, the modulated IF signal coming from the IF input terminal 1 is branched into two by the branch part 110.

In the first external modulation part 320, the inputted optical signal is modulated in intensity according to one of the IF signals branched by the branch part 110. This modulation results in a distortion component. The other of the IF signals branched by the branch part 110 is applied to the distortion generating part 520, and therein, a distortion component of a power level almost the same as the distortion component is generated in the first external modulation part 320. In the second external modulation part 330, the inputted optical signal is modulated in intensity according to the distortion component generated in the distortion generating part 520.

In the second coupler 117, the optical signal from the first external modulation part 320 and the optical signal from the second external modulation part 330 are coupled together, and outputted to the optical fiber 120 as the output from the radio-frequency transmitter with the function of distortion compensation. Then, the resulting coupled optical signal is converted into an electrical signal in the third optical-electrical conversion part 121, and outputted from the output terminal 2.

Here, the IF signal is frequency-converted into a radio-frequency based on the frequency corresponding to a difference in wavelength between the optical signals outputted from the first and second external modulation parts 320 and 330. Also, the delay part 510 is adjusted in delay so that the distortion component included in the optical signal from the first external modulation part 320 and the distortion component in the optical signal from the second external modulation part 330 are opposite in phase and cancel out each other.

As described above, in the radio-frequency transmitter with the function of distortion compensation of the present embodiment, the distortion generating part is provided for generating a distortion component to cancel out another distortion component to be occurred when an IF signal is converted into an optical signal. Thus, compared with the second embodiment, there is no more need to include the device needed for distortion extraction after converting the IF signal into the optical signal. Accordingly, a radio-frequency transmitter with the function of distortion compensation can be realized with a simplified structure.

### (Fifth embodiment)

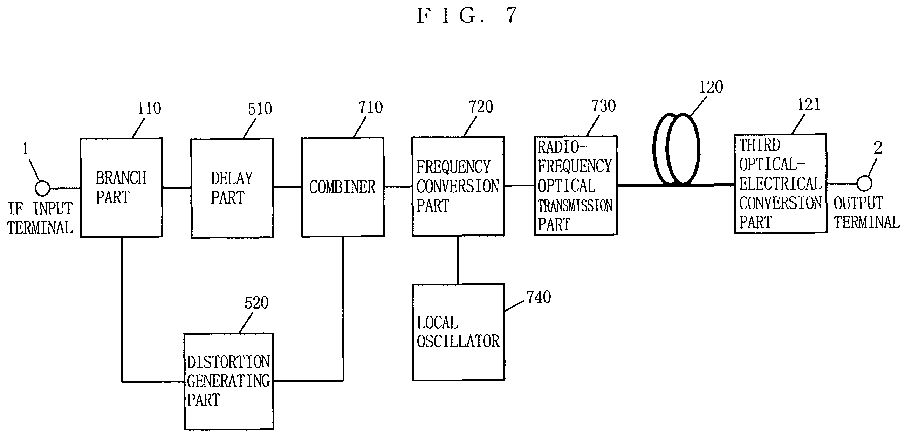

FIG. 7 shows the structure of a radio-frequency transmitter with the function of distortion compensation according to a fifth embodiment of the present invention. In FIG. 7, the radio-frequency transmitter with the function of distortion compensation includes the IF input terminal 1, the output terminal 2, the branch part 110, the delay part 510, the distortion generating part 520, a combiner 710, a radio-frequency optical transmission part 730, a local oscillator 740, the optical fiber 120, and the third optical-electrical conversion part 121.

Described now is the operation of the radio-frequency transmitter with the function of distortion compensation of the present embodiment. The modulated IF signal provided by the IF input terminal 1 is branched into two by the branch part 110. One of the IF signals branched in the branch part 110 is applied to the combiner 710 via the delay part 510. The other of the resulting IF signals branched by the branch unit 110 is forwarded to the distortion generating part 520, and therein, a distortion component is generated. Here, outputted to the combiner 710 is only this distortion component. In the combiner 710, the IF signal from the delay part 510 and the distortion component from the distortion generating part 520 are coupled together. Then in the frequency conversion part 720, the resulting coupled optical signal is converted from intermediate-frequency to radio-frequency according to the frequency of a local oscillator signal coming from the local oscillator 740. The resultantly derived RF signal is then converted into an optical signal in the radio-frequency optical transmission part 730, and outputted to the optical fiber 120 as the output from the radio-frequency transmitter with the function of distortion compensation. Then, the optical signal is converted into an electrical signal in the third optical-electrical conversion part 121, and outputted from the output terminal 2.

In the combiner 710, the delay part 510 is adjusted in delay so that a phase difference between the IF signal and the distortion component becomes opposite to that between the RF signal and the distortion component occurred when the RF signal is converted into an optical signal in the radio-frequency optical transmission part 730. Here, the distortion component generated in the distortion generating part 520 is converted into the radio-frequency band together with the IF signal by the frequency conversion part 720, and then forwarded to the radio-frequency optical transmission part 730. At this time, the distortion component occurred when the RF signal is converted into the optical signal and the distortion component generated in the distortion generating part 520 cancel out each other, thus realizing optical transmission with low distortion. Here, when the transmission path is a coaxial line or waveguide instead of the optical fiber 120, the radio-frequency optical transmission part 730 may be replaced with a radio-frequency amplification part to transmit the radio-frequency signal. If this is the case, the distortion component occurred in the radio-frequency amplification part can be canceled out by the distortion component generated in the distortion generation part similarly to the above.

As described above, in the radio-frequency transmitter with the function of distortion compensation of the present embodiment, before being frequency-converted to a radio-frequency, an IF signal is added with a distortion component in an intermediate-frequency band, frequency-converted to an RF signal, and then converted into an optical signal. Thereby, a distortion component resulting from electrical-optical conversion can be cancelled out. In this manner, a low-priced low-frequency constituent can be used as an electrical device for adding the distortion component, realizing an economically-practical radio-frequency transmitter with the function of distortion compensation.

As described in the above embodiments, the radio-frequency transmitter with the function of distortion compensation of the present invention is provided with a distortion generating part for canceling out a distortion component generated at electrical-optical conversion. Here, the distortion generating part operates not in a radio-frequency band as the conventional distortion-compensating optical transmitter but in an intermediate-frequency band. Further, an IF signal is optically frequency-converted into an RF signal by a frequency corresponding to a beat component between optical signals outputted from two light sources, thus realizing a high-performance economically-practical radio-frequency transmitter. Further, when the transmission path is not the optical fiber, instead of the electrical-optical conversion, the IF signal is electrically frequency-converted into the RF signal, and then radio-frequency amplification is carried out. In such case, the radio-frequency transmitter with the function of distortion compensation of the present invention can cancel out the distortion component occurred at the time of radio-frequency amplification, achieving the same effects as above.

While the invention has been described in detail, the foregoing description is in all aspects illustrative and not restrictive. It is understood that numerous other modifications and variations can be devised without departing from the scope of the invention.

## Claims

1. A radio-frequency transmitter with a function of distortion compensation, comprising:
a branch part (110) for branching an electrical signal into two;
a first optical transmission part (111) for converting one of the electrical signals branched by said branch part (110) into an optical signal;
a first coupler (112) for branching into two the optical signal outputted from said first optical transmission part (111) ;
a first optical-electrical conversion part (114) for converting one of the optical signals branched by said first coupler (112) into an electrical signal;
a distortion detection part (115) for extracting a distortion component as a differential component between the electrical signal outputted from said first optical-electrical conversion part (114) and the other of the electrical signals branched by said branch part (110);
a second optical transmission part (116) for inverting a phase of the distortion component extracted by said distortion detection part (115), and converting the distortion component into an optical signal;
an optical delay part (113) for delaying the other of the optical signals branched by said first coupler (112) by a predetermined length of time; and
a second coupler (117) for coupling the optical signal outputted from said second optical transmission part (116) and the optical signal passed through said optical delay part (113), and sending out a resulting coupled optical signal to an optical transmission path as a transmission signal.

2. A radio-frequency transmitter with a function of distortion compensation, comprising:
a branch part (110) for branching an electrical signal into two;
first and second light sources (410, 420) for outputting lights;
a first external modulation part (320) for modulating an optical signal in intensity outputted from said first light source (410) based on one of the electrical signals branched by said branch part (110);
a first coupler (112) for branching into two the optical signal outputted from said first external modulation part (320) ;
a first optical-electrical conversion part (114) for converting the other of the optical signals branched by said first coupler (112) into an electrical signal;
a distortion detection part (115) for extracting a distortion component as a differential component between the electrical signal outputted from said first optical-electrical conversion part (114) and the other of the electrical signals branched by said branch part (110);
a second external modulation part (330) for inverting a phase of the distortion component extracted by said distortion detection part (115), and based on the distortion component, modulating the optical signal in intensity outputted from said second light source (420);
an optical delay part (113) for delaying the other of the optical signals branched by said first coupler (112) by a predetermined length of time; and
a second coupler (117) for coupling the optical signal outputted from said second external modulation part (330) and the optical signal passed through said light delay part (113), and sending out a resulting coupled optical signal to an optical transmission path as a transmission signal.

3. The radio-frequency transmitter with the function of distortion compensation according to claim 1, further comprising:
a second optical-electrical conversion part (118) for converting a part of the optical signal outputted from said second coupler (117) into an electrical signal; and
an optical frequency control part (119) for extracting a predetermined frequency component from the electrical signal outputted from said second optical-electrical conversion part (118), and controlling said first optical transmission part (111) and/or said second optical transmission part (116) to keep a difference in optical frequency constant between an optical carrier outputted from said first optical transmission part (111) and another optical carrier outputted from said second optical transmission part (116).

4. The radio-frequency transmitter with the function of distortion compensation according to claim 2, further comprising:
a second optical-electrical conversion part (118) for converting a part of the optical signal outputted from said second coupler (117) into an electrical signal; and
an optical frequency control part (119) for extracting a predetermined frequency component from the electrical signal outputted from said second optical-electrical conversion part (118), and controlling said first light source (410) and/or said second light source (420) to keep a difference in optical frequency constant between an optical carrier outputted from said first light source (410) and another optical carrier outputted from said second light source (420).

5. A radio-frequency transmitter with a function of distortion compensation, comprising:
a branch part (110) for branching an electrical signal into two;
a multi-wavelength light source (430) for outputting a light having optical spectra at a constant wavelength interval;
a wavelength separation part (440) for extracting two of the optical spectra differing in wavelength by a predetermined value from the light outputted from said multi-wavelength light source (430), separating the extracted two spectra, and outputting as first and second optical signals;
a first external modulation part (320) for modulating, based on the other of the electrical signals branched by said branch part (110), said first optical signal in intensity inputted by said wavelength separation part (440);
a first coupler (112) for branching into two the optical signal outputted from said first external modulation part (320) ;
a first optical-electrical conversion part (114) for converting the other of the optical signals branched by said first coupler (112) into an electrical signal;
a distortion detection part (115) for extracting a distortion component as a differential component between the electrical signal outputted from said first optical-electrical conversion part (114) and the other of the electrical signals branched by said branch part (110);
a second external modulation part (330) for inverting a phase of the distortion component extracted by said distortion detection part (115), and based on the distortion component, modulating said second optical signal in intensity inputted by said wavelength separation part (440);
an optical delay part (113) for delaying the other of the optical signals branched by said first coupler (112) by a predetermined length of time; and
a second coupler (117) for coupling the optical signal outputted from said second external modulation part (330) and the optical signal passed through said light delay part (113), and sending out a resulting coupled optical signal to an optical transmission path as a transmission signal.

6. A radio-frequency transmitter with a function of distortion compensation, comprising:
a branch part (110) for branching an electrical signal into two;
a delay part (510) for delaying one of the electrical signals branched by said branch part (110) by a predetermined length of time;
a first optical transmission part (111) for converting the electrical signal outputted from said delay part (510) into an optical signal;
a distortion generating part (520) for generating, from the other of the electrical signals branched by said branch part (110), a distortion component of predetermined amplitude having a phase opposite to a distortion component occurred in said first optical transmission part (111);
a second optical transmission part (116) for converting the distortion component outputted from said distortion generating part (520) into an optical signal; and
a second coupler (117) for coupling the optical signal outputted from said first optical transmission part (111) and the optical signal from said second optical transmission part (116), and sending out a resulting coupled optical signal to a transmission path as a transmission signal.

7. A radio-frequency transmitter with a function of distortion compensation, comprising:
a branch part (110) for branching an electrical signal into two;
a delay part (510) for delaying one of the electrical signals branched by said branch part (110) by a predetermined length of time;
first and second light sources (410, 420) for outputting lights;
a first external modulation part (320) for modulating the optical signal in intensity outputted from said first light source (410) based on the electrical signal outputted from said delay part (510) ;
a distortion generating part (520) for generating, from the other of the electrical signals branched by said branch part (110), a distortion component of predetermined amplitude having a phase opposite to a distortion component occurred in said first external modulation part (320);
a second external modulation part (330) for modulating the optical signal in intensity outputted from said second light source (420) based on the distortion component outputted from said distortion generating part (520); and
a second coupler (117) for coupling the optical signal outputted from said first external modulation part (320) and the optical signal from said second external modulation part (330), and sending out a resulting coupled optical signal to a transmission path as a transmission signal.

8. The radio-frequency transmitter with the function of distortion compensation according to claim 6, further comprising:
a second optical-electrical conversion part (118) for converting a part of the optical signal outputted from said second coupler (117) into an electrical signal; and
an optical frequency control part (119) for extracting a predetermined frequency component from the electrical signal outputted from said second optical-electrical conversion part (118), and controlling said first optical transmission part (111) and/or said second optical transmission part (116) to keep a difference in optical frequency constant between an optical carrier outputted from said first optical transmission part (111) and another optical carrier outputted from said second optical transmission part (116).

9. The radio-frequency transmitter with the function of distortion compensation according to claim 7, further comprising:
a second optical-electrical conversion part (118) for converting a part of the optical signal outputted from said second coupler (117) into an electrical signal; and
an optical frequency control part (119) for extracting a predetermined frequency component from the electrical signal outputted from said second optical-electrical conversion part (118), and controlling said first light source (410) and/or said second light source (420) to keep a difference in optical frequency constant between an optical carrier outputted from said first light source (410) and another optical carrier outputted from said second light source (420).

10. A radio-frequency transmitter with a function of distortion compensation, comprising:
a branch part (110) for branching an electrical signal into two;
a delay part (510) for delaying one of the electrical signals branched by said branch part (110) by a predetermined length of time;
a multi-wavelength light source (430) for outputting a light having optical spectra at a constant wavelength interval;
a wavelength separation part (440) for extracting two of the optical spectra differing in wavelength by a predetermined value from the light outputted from said multi-wavelength light source (430), separating the extracted two spectra, and outputting as first and second optical signals;
a first external modulation part (320) for modulating, based on the electrical signal outputted from said delay part (510), said first optical signal in intensity inputted by said wavelength separation part (440);
a distortion detection part (520) for generating, from the other electrical signals branched by said branch part (110), a distortion component of predetermined amplitude having a phase opposite to a distortion component occurred in said first external modulation part (320);
a second external modulation part (330) for modulating, based on the distortion component outputted from said distortion detection part (520), said second optical signal in intensity inputted by said wavelength separation part (440); and
a second coupler (117) for coupling the optical signal outputted from said first external modulation part (320) and the optical signal outputted from said second external modulation part (330), and sending out a resulting coupled optical signal to an optical transmission path as a transmission signal.

11. A radio-frequency transmitter with a function of distortion compensation, comprising:
a branch part (110) for branching an electrical signal into two;
a delay part (510) for delaying one of the electrical signals branched by said branch part (110) by a predetermined length of time;
a distortion generating part (520) for generating, from the other of the electrical signals branched by said branch part (110), a distortion component of a predetermined phase and amplitude;
a combiner (710) for combining the electrical signal outputted from said delay part (510) and the distortion component outputted from said distortion generating part (520);
a frequency conversion part (720) for converting a resulting signal outputted from said combiner (710) into a predetermined frequency; and
a radio-frequency optical transmission part (730) for converting a resulting signal converted into the predetermined frequency by said frequency conversion part (720) into an optical signal; wherein
the distortion component generated in said distortion generating part (520) is opposite in phase to a distortion component occurred in said radio-frequency optical transmission part (730).

12. A radio-frequency transmitter with a function of distortion compensation, comprising:
a branch part (110) for branching an electrical signal into two;
a delay part (510) for delaying one of the electrical signals branched by said branch part (110) by a predetermined length of time;
a distortion generating part (520) for generating, from the other of the electrical signals branched by said branch part (110), a distortion component of a predetermined phase and amplitude;
a combiner (710) for combining the electrical signal outputted from said delay part (510) and the distortion component outputted from said distortion generating part (520);
a frequency conversion part (720) for converting a resulting signal outputted from said combiner (710) into a predetermined frequency; and
a radio-frequency amplification part for amplifying a resulting signal converted into the predetermined frequency by said frequency conversion part (720) into an optical signal; wherein
the distortion component generated in said distortion generating part (520) is opposite in phase to a distortion component occurred in said radio-frequency amplification part.
